(19) Europäisches Patentamt
European Patent Office
Office européen des brevets

(11) EP 3 738 997 B1

(12) EUROPEAN PATENT SPECIFICATION

(45) Date of publication and mention of the grant of the patent:
**08.12.2021 Bulletin 2021/49**

(51) Int Cl.:
***C08L 7/00*** (2006.01) ***B60C 1/00*** (2006.01)

(21) Application number: **20155611.5**

(22) Date of filing: **05.02.2020**

# (54) MOTORCYCLE TIRE

MOTORRADREIFEN

PNEUMATIQUE DE MOTO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.02.2019 JP 2019022486**
**10.01.2020 JP 2020002542**

(43) Date of publication of application:
**18.11.2020 Bulletin 2020/47**

(73) Proprietor: **Sumitomo Rubber Industries, Ltd.**
**Kobe-shi, Hyogo-ken 651-0072 (JP)**

(72) Inventor: **KOTA, Tomita**
**Kobe-shi, Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 3 061 629**
**WO-A1-2015/097582**
**US-A1- 2009 107 595**
**US-A1- 2009 308 512**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 738 997 B1

## Description

TECHNICAL FIELD

The present invention relates to a motorcycle tire.

BACKGROUND ART

With the increase in power output, it has become necessary for motorcycle tires to have not only high dry grip performance and wet braking performance but also improved abrasion resistance. However, these three properties are usually contradictory to one another and thus difficult to improve simultaneously.

For example, Patent Literature 1 discloses a two-wheeled vehicle tire with a shoulder rubber containing a certain silica. Yet, it is desirable to further enhance a balanced improvement in properties including dry grip performance, wet braking performance, and abrasion resistance. It is also needed to provide ice performance, a uniform color tone, etc. to tires.

CITATION LIST

PATENT LITERATURE

Patent Literature 1: JP 2011-189808 A

SUMMARY OF INVENTION

TECHNICAL PROBLEM

The present invention aims to solve the problems and provide a motorcycle tire having excellent overall performance including dry grip performance, wet braking performance, abrasion resistance, ice performance, and color tone.

SOLUTION TO PROBLEM

The present invention relates to a motorcycle tire, having a tread portion including a tread rubber, the tread rubber being divided into at least three parts in a tire width direction, the tread rubber including a center rubber at its center, viewed in the tire width direction, and shoulder rubbers respectively on opposite sides of the center rubber, viewed in the tire width direction, the center rubber being formed of a center rubber composition containing a rubber component with a styrene-butadiene rubber content of 50% by mass or higher, silica, carbon black, and a resin, the center rubber composition containing, per 100 parts by mass of the rubber component, 90 parts by mass or more of the silica, 1 to 15 parts by mass of the carbon black, and 25 parts by mass or more of the resin, the shoulder rubbers each being formed of a shoulder rubber composition containing a rubber component with a styrene-butadiene rubber content of 70% by mass or higher, silica, carbon black, and a resin, the shoulder rubber composition containing, per 100 parts by mass of the rubber component, at least 20 parts by mass but less than 90 parts by mass of the silica, more than 15 parts by mass but not more than 40 parts by mass of the carbon black, and 1 to 40 parts by mass of the resin.

Preferably, the center rubber composition has a polybutadiene rubber content of 10 to 50% by mass based on 100% by mass of the rubber component, and the shoulder rubber composition has a polybutadiene rubber content of 5 to 30% by mass based on 100% by mass of the rubber component.

ADVANTAGEOUS EFFECTS OF INVENTION

The motorcycle tire according to the present invention has a tread portion including a tread rubber that is divided into at least three parts in the tire width direction. The tread rubber includes a center rubber at its center, viewed in the tire width direction, and shoulder rubbers respectively on opposite sides of the center rubber, viewed in the tire width direction. The center and shoulder rubbers are formed of specific center and shoulder rubber compositions, respectively. Such a motorcycle tire achieves significantly improved overall performance including dry grip performance, wet braking performance, abrasion resistance, ice performance, and color tone.

BRIEF DESCRIPTION OF DRAWINGS

Fig. 1 illustrates a meridional cross-sectional view of a motorcycle tire according to one embodiment of the

present invention including the rotational axis of the tire.

DESCRIPTION OF EMBODIMENTS

The motorcycle tire of the present invention has a tread portion including a tread rubber that is divided into at least three parts in the tire width direction. The tread rubber includes a center rubber at its center, viewed in the tire width direction, and shoulder rubbers respectively on opposite sides of the center rubber, viewed in the tire width direction. Further, the center and shoulder rubbers contain specific center and shoulder rubber compositions, respectively.

First, three properties, including dry grip performance, wet braking performance, and abrasion resistance, can be simultaneously achieved by using a composition focusing on abrasion resistance and wet braking performance for a center rubber, which always contacts the ground, and a composition focusing on dry grip performance for shoulder rubbers, which are often used while the vehicle is running at an angle . Further, ice performance can also be improved by adjusting the composition of the center rubber (e.g., its polybutadiene rubber content) to enhance low-temperature plasticity.

Moreover, although a possible technique for enhancing abrasion resistance is to increase the proportion of carbon black to the total filler in the center rubber, it may reduce wet braking performance, and therefore a silica formulation is used for the center rubber. In view of dry grip performance of the shoulder rubber, it can be possible to increase the amount of carbon black, but this technique may cause the shoulder rubber to have a different color tone from the center rubber. For this reason, a silica formulation is used and, at the same time, the proportion of polymers is changed, thereby satisfying the required properties. Accordingly, the present invention provides a motorcycle tire having excellent overall performance including dry grip performance, wet braking performance, abrasion resistance, ice performance, and color tone.

An exemplary motorcycle tire according to one embodiment of the present invention is described with reference to the drawing. Fig. 1 illustrates a meridional cross-sectional view of the motorcycle tire according to one embodiment of the present invention including the rotational axis of the tire.

The motorcycle tire 1 includes a carcass 6 extending from a tread portion 2 via a sidewall portion 3 to a bead core 5 of a bead portion 4, and a belt layer 7 located outwardly of the carcass 6 and inwardly of the tread portion 2 with respect to the tire radial direction.

In the cross section, a tread face 2A of the tread portion 2 which contacts the road extends curved in an arc shape protruding outward in the tire radial direction. Moreover, tread edges 2e defining the outer ends of the tread face 2A, viewed in the tire axial direction, are located on the axially outermost sides.

The tread portion 2 includes a tread rubber 9 on a radially outer side of the belt layer 7. The tread rubber 9 in this embodiment constitutes a portion extending from the outer surface of the belt layer 7 to the tread face 2A. Also with respect to the tread rubber 9 in this embodiment, the tread portion consists of divided tread parts located in the tire width direction. In the present case, the divided tread parts are formed of two rubber compositions with different formulations, respectively.

Specifically, the tread rubber 9 includes a center rubber 9A centered at a tire equator C and a pair of shoulder rubbers 9B each adjoining the center rubber 9A and extending to the tread edge 2e. In other words, two types of rubbers, i.e., the center rubber 9A and the shoulder rubbers 9B are located side by side from the vicinity of the tire equator C towards either widthwise side of the tire. The center rubber 9A and the shoulder rubbers 9B are separated by a normal line 12 drawn from the tread face 2A. However, they may be separated by, for example, a boundary line extending from the tread face 2A towards the belt layer 7 and being inclined outward or inward in the tire axial direction.

This embodiment is described as a case where the tread rubber 9 consists of divided tread parts of two types (center rubber 9A and a pair of shoulder rubbers 9B). The number of types of divided tread parts is not limited, and may be, for example, three or five.

The center and shoulder rubbers contain the rubber compositions described below.

[Center rubber]

The center rubber composition forming the center rubber contains a rubber component including a styrene-butadiene rubber (SBR).

From the standpoint of properties such as wet braking performance and abrasion resistance, the center rubber composition contains SBR in an amount of 50% by mass or more, preferably 55% by mass or more, more preferably 65% by mass or more based on 100% by mass of the rubber component. From the stand point of ice performance, the amount of SBR is preferably 90% by mass or less, more preferably 80% by mass or less, still more preferably 75% by mass or less.

The SBR preferably has a styrene content of 20% by mass or higher, more preferably 25% by mass or higher. When the styrene content is not lower than the lower limit, good properties such as dry grip performance and wet braking

performance tend to be obtained. The upper limit of the styrene content is also preferably 60% by mass or lower, more preferably 55% by mass or lower, still more preferably 50% by mass or lower. When the styrene content is not higher than the upper limit, good fuel economy tends to be obtained.

Herein, the styrene content of the SBR is determined by $^1$H-NMR.

The SBR preferably has a vinyl content of 10% by mass or higher, more preferably 15% by mass or higher, still more preferably 20% by mass or higher. The vinyl content is preferably 65% by mass or lower, more preferably 60% by mass or lower. When the vinyl content is within the range indicated above, good properties such as dry grip performance and wet braking performance tend to be obtained.

The vinyl content (1,2-butadiene unit content) can be measured by infrared absorption spectrometry.

The SBR preferably has a weight average molecular weight (Mw) of 400,000 or more, more preferably 700,000 or more, still more preferably 850,000 or more. When the Mw is not less than the lower limit, good properties such as abrasion resistance tend to be obtained. The Mw is preferably 1,800,000 or less, more preferably 1,600,000 or less, still more preferably 1,400,000 or less. When the Mw is not more than the upper limit, good processability tends to be obtained.

Herein, the weight average molecular weight (Mw) can be determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards.

Any SBR may be used. Examples include emulsion-polymerized styrene-butadiene rubber (E-SBR) and solution-polymerized styrene-butadiene rubber (S-SBR). The SBR may be either an unmodified or modified SBR.

The modified SBR may be any SBR having a functional group interactive with filler such as silica. For example, it may be a chain end-modified SBR obtained by modifying at least one chain end of SBR with a compound (modifier) having the functional group (i.e., a chain end-modified SBR terminated with the functional group) ; a backbone-modified SBR having the functional group in the backbone; a backbone- and chain end-modified SBR having the functional group in both the backbone and chain end (e.g., a backbone- and chain end-modified SBR in which the backbone has the functional group, and at least one chain end is modified with the modifier); or a chain end-modified SBR that has been modified (coupled) with a polyfunctional compound having two or more epoxy groups in the molecule so that a hydroxyl or epoxy group is introduced.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxyl, oxy, and epoxy groups. These functional groups may be substituted. Among these, amino (preferably amino whose hydrogen atom is replaced with a C1-C6 alkyl group), alkoxy (preferably C1-C6 alkoxy), and alkoxysilyl (preferably C1-C6 alkoxysilyl) groups are preferred.

The modified SBR may suitably be a SBR modified with a compound (modifier) represented by the following formula:

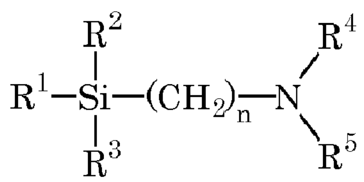

wherein $R^1$, $R^2$, and $R^3$ are the same or different and each represent an alkyl, alkoxy, silyloxy, acetal, carboxyl (-COOH), or mercapto (-SH) group, or a derivative thereof; $R^4$ and $R^5$ are the same or different and each represent a hydrogen atom or an alkyl group, and $R^4$ and $R^5$ may be joined together to form a ring structure with the nitrogen atom; and n represents an integer.

In particular, the SBR modified with the compound (modifier) of the above formula may suitably be one obtained by modifying the polymerizing end (active terminal) of a solution-polymerized styrene-butadiene rubber (S-SBR) with the compound of the above formula (e.g., modified SBR disclosed in JP 2010-111753 A, which is hereby incorporated by reference in its entirety).

$R^1$, $R^2$, and $R^3$ may each suitably be an alkoxy group, preferably a C1-C8, more preferably C1-C4 alkoxy group. $R^4$ and $R^5$ may each suitably be an alkyl group, preferably a C1-C3 alkyl group. The integer n is preferably 1 to 5, more preferably 2 to 4, still more preferably 3. When $R^4$ and $R^5$ are joined together to form a ring structure with the nitrogen atom, the ring structure is preferably a 4- to 8-membered ring. The term "alkoxy group" encompasses cycloalkoxy (e.g., cyclohexyloxy) and aryloxy (e.g., phenoxy, benzyloxy) groups.

Specific examples of the modifier include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. Among these, 3-dimethylaminopropyltrimethoxysilane, 3-dimethylaminopropyltriethoxysilane, and 3-diethylaminopropyltrimethoxysilane are preferred. These may be used alone or in combinations of two or more.

The modified SBR may also suitably be a SBR modified with any of the compounds (modifiers) listed below. Examples of the modifiers include: polyglycidyl ethers of polyhydric alcohols such as ethylene glycol diglycidyl ether, glycerol triglycidyl ether, trimethylolethane triglycidyl ether, and trimethylolpropane triglycidyl ether; polyglycidyl ethers of aromatic compounds having two or more phenol groups such as diglycidylated bisphenol A; polyepoxy compounds such as 1,4-diglycidylbenzene, 1,3,5-triglycidylbenzene, and polyepoxidized liquid polybutadiene; epoxy group-containing tertiary amines such as 4,4'-diglycidyl-diphenylmethylamine and 4,4'-diglycidyl-dibenzylmethylamine; diglycidylamino compounds such as diglycidylaniline, N,N'-diglycidyl-4-glycidyloxyaniline, diglycidylorthotoluidine, tetraglycidyl metaxylenediamine, tetraglycidylaminodiphenylmethane, tetraglycidyl-p-phenylenediamine, diglycidylaminomethylcyclohexane, and tetraglycidyl-1,3-bisaminomethylcyclohexane;

amino group-containing acid chlorides such as bis(1-methylpropyl)carbamyl chloride, 4-morpholinecarbonyl chloride, 1-pyrrolidinecarbonyl chloride, N,N-dimethylcarbamic acid chloride, and N,N-diethylcarbamic acid chloride; epoxy group-containing silane compounds such as 1,3-bis(glycidyloxypropyl)-tetramethyldisiloxane and (3-glycidyloxypropyl)-pentamethyldisiloxane;

sulfide group-containing silane compounds such as (trimethylsilyl)[3-(trimethoxysilyl)propyl]sulfide, (trimethylsilyl)[3-(triethoxysilyl)propyl]sulfide, (trimethylsilyl)[3-(tripropoxysilyl) propyl]sulfide, (trimethylsilyl)[3-(tributoxysilyl)propyl]sulfide, (trimethylsilyl)[3-(methyldimethoxysilyl)propyl]sulfide, (trimethylsilyl)[3-(methyldiethoxysilyl)propyl]sulfide, (trimethylsilyl)[3-(methyldipropoxysilyl)propyl]sulfide, and (trimethylsilyl)[3-(methyldibutoxysilyl)propyl]sulfide;

N-substituted aziridine compounds such as ethyleneimine and propyleneimine; alkoxysilanes such as methyltriethoxysilane; (thio)benzophenone compounds containing amino and/or substituted amino groups such as 4-N,N-dimethylaminobenzophenone, 4-N,N-di-t-butylaminobenzophenone, 4-N,N-diphenylaminobenzophenone, 4,4'-bis(dimethylamino)benzophenone, 4,4'-bis(diethylamino)benzophenone, 4,4'-bis(diphenylamino)benzophenone, and N,N,N',N'-bis(tetraethylamino)benzophenone; benzaldehyde compounds containing amino and/or substituted amino groups such as 4-N,N-dimethylaminobenzaldehyde, 4-N,N-diphenylaminobenzaldehyde, and 4-N,N-divinylaminobenzaldehyde; N-substituted pyrrolidones such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone; N-substituted piperidones such as N-methyl-2-piperidone, N-vinyl-2-piperidone, and N-phenyl-2-piperidone; N-substituted lactams such as N-methyl-ε-caprolactam, N-phenyl-ε-caprolactam, N-methyl-ω-laurilolactam, N-vinyl-ω-laurilolactam, N-methyl-β-propiolactam, and N-phenyl-β-propiolactam; and N,N-bis(2,3-epoxypropoxy)aniline, 4,4-methylene-bis(N,N-glycidylaniline), tris(2,3-epoxypropyl)-1,3,5-triazine-2,4,6-triones, N,N-diethylacetamide, N-methylmaleimide, N,N-diethyl urea, 1,3-dimethylethylene urea, 1,3-divinylethylene urea, 1,3-diethyl-2-imidazolidinone, 1-methyl-3-ethyl-2-imidazolidinone, 4-N,N-dimethylaminoacetophenone, 4-N,N-diethylaminoacetophenone, 1,3-bis(diphenylamino)-2-propanone, and 1,7-bis(methylethylamino)-4-heptanone. The modified SBR is preferably one modified with an alkoxysilane, among others.

The modification with any of the above-listed compounds (modifiers) may be carried out by known methods.

The SBR may be one manufactured or sold by, for example, Sumitomo Chemical Co., Ltd., JSR Corporation, Asahi Kasei Corporation, Zeon Corporation, or Dow Chemical.

Examples of rubbers other than SBR that may be used in the rubber component of the center rubber composition include diene rubbers such as isoprene-based rubbers, polybutadiene rubbers (BR), acrylonitrile-butadiene rubbers (NBR), chloroprene rubbers (CR), butyl rubbers (IIR), and styrene-isoprene-butadiene copolymer rubbers (SIBR). Examples of the isoprene-based rubbers include natural rubbers (NR), polyisoprene rubbers (IR), refined NR, modified NR, and modified IR. Examples of the NR include those commonly used in the tire industry such as SIR20, RSS#3, and TSR20. Non-limiting examples of the IR include those commonly used in the tire industry such as IR2200. Examples of the refined NR include deproteinized natural rubbers (DPNR) and highly purified natural rubbers (UPNR). Examples of the modified NR include epoxidized natural rubbers (ENR) , hydrogenated natural rubbers (HNR), and grafted natural rubbers. Examples of the modified IR include epoxidized polyisoprene rubbers, hydrogenated polyisoprene rubbers, and grafted polyisoprene rubbers. From the standpoint of properties such as abrasion resistance and ice performance, BR is preferred among these. The rubbers including SBR may be used alone or in combinations of two or more.

The center rubber composition preferably contains BR in an amount of 10% by mass or more, more preferably 20% by mass or more, still more preferably 30% by mass or more based on 100% by mass of the rubber component. When the amount is not less than the lower limit, good properties such as abrasion resistance and ice performance tend to be obtained. The upper limit of the amount is preferably 50% by mass or less, more preferably 45% by mass or less, still more preferably 35% by mass or less. When the amount is not more than the upper limit, the predetermined SBR content tends to be ensured so that good properties such as dry grip performance and wet braking performance can be obtained.

Any BR may be used, including high-cis BR and BR containing syndiotactic polybutadiene crystals. The BR may be either an unmodified or modified BR. Examples of the modified BR include those into which the above-mentioned functional groups are introduced. These may be used alone or in combinations of two or more. In particular, to improve abrasion resistance, the BR may suitably have a cis content of 90% by mass or higher, preferably 95% by mass or

higher. Herein, the cis content can be measured by infrared absorption spectrometry.

The BR may be a commercial product of, for example, Ube Industries, Ltd., JSR Corporation, Asahi Kasei Corporation, or Zeon Corporation.

Examples of the silica used in the center rubber composition include dry silica (anhydrous silica) and wet silica (hydrous silica). Among these, wet silica is preferred because it contains a large number of silanol groups.

The center rubber composition contains the silica in an amount of 90 parts by mass or more, preferably 92 parts by mass or more, more preferably 95 parts by mass or more, per 100 parts by mass of the rubber component. When the amount is not less than the lower limit, good properties such as wet braking performance tend to be obtained. The upper limit of the amount is preferably 150 parts by mass or less, more preferably 130 parts by mass or less, still more preferably 110 parts by mass or less. When the amount is not more than the upper limit, good dispersibility tends to be obtained.

The silica preferably has a nitrogen adsorption specific surface area ($N_2SA$) of 80 $m^2/g$ or more, more preferably 120 $m^2/g$ or more, still more preferably 150 $m^2/g$ or more. When the $N_2SA$ is not less than the lower limit, good properties such as dry grip performance and wet braking performance tend to be obtained. The $N_2SA$ of the silica is also preferably 250 $m^2/g$ or less, more preferably 200 $m^2/g$ or less. When the $N_2SA$ is not more than the upper limit, good dispersibility tends to be obtained.

The $N_2SA$ of the silica is measured by the BET method in accordance with ASTM D3037-93.

The silica may be a commercial product of, for example, Degussa, Rhodia, Tosoh Silica Corporation, Solvay Japan, or Tokuyama Corporation.

The center rubber composition preferably contains a silane coupling agent together with the silica.

Any silane coupling agent may be used, and examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. These may be used alone or in combinations of two or more. To better achieve the advantageous effects, sulfide and/or mercapto silane coupling agents are preferred among these.

The silane coupling agent may be a commercial product of, for example, Degussa, Momentive, Shin-Etsu Silicone, Tokyo Chemical Industry Co., Ltd., AZmax. Co., or Dow Corning Toray Co., Ltd.

The amount of the silane coupling agent per 100 parts by mass of the silica is preferably 3 parts by mass or more, more preferably 5 parts by mass or more. When the amount is 3 parts by mass or more, such an addition tends to produce its effect. The amount is also preferably 25 parts by mass or less, more preferably 20 parts by mass or less. When the amount is 25 parts by mass or less, an effect commensurate with the added amount tends to be obtained while ensuring good processability during kneading.

Non-limiting examples of carbon black usable in the center rubber composition include GPF, FEF, HAF, ISAF, and SAF. Examples of usable commercial products include those available from Asahi Carbon Co., Ltd., Cabot Japan K. K., Tokai Carbon Co., Ltd., Mitsubishi Chemical Corporation, Lion Corporation, NSCC Carbon Co., Ltd, and Columbia Carbon. The incorporation of carbon black provides reinforcing properties, thereby significantly improving properties such as abrasion resistance.

The center rubber composition contains the carbon black in an amount of 1 part by mass or more, preferably 5 parts by mass or more, more preferably 7 parts by mass or more per 100 parts by mass of the rubber component. When the amount is not less than the lower limit, the effect produced by the incorporation of carbon black tends to be sufficient, and degradation by factors such as ultraviolet light can be prevented. Moreover, the amount of the carbon black is 15 parts by mass or less, preferably 13 parts by mass or less, more preferably 12 parts by mass or less. When the amount is not more than the upper limit, good dispersibility and good fuel economy tend to be obtained.

In the center rubber composition, the carbon black preferably has a nitrogen adsorption specific surface area ($N_2SA$) of 50 $m^2/g$ or more, more preferably 80 $m^2/g$ or more, still more preferably 100 $m^2/g$ or more. When the $N_2SA$ is not less than the lower limit, good reinforcing properties tend to be obtained. The upper limit of the $N_2SA$ of the carbon black is not limited but is preferably 200 $m^2/g$ or less, more preferably 160 $m^2/g$ or less, still more preferably 140 $m^2/g$ or less.

The nitrogen adsorption specific surface area of the carbon black can be determined by the method A in

accordance with JIS K 6217.

In the center rubber composition, the amount of the silica based on 100% by mass of the combined amount of the silica and carbon black is preferably 50% by mass or more, more preferably 75% by mass or more, still more preferably 85% by mass or more. When the amount is not less than the lower limit, good properties such as wet braking performance tend to be obtained. The upper limit of the amount is preferably 95% by mass or less, more preferably 93% by mass or less.

Examples of resins that can be used in the center rubber composition include liquid resins (resins that are liquid at room temperature (25°C)) and solid resins (resins that are solid at room temperature (25°C)).

The center rubber composition contains the resin in an amount of 25 parts by mass or more, preferably 30 parts by mass or more, more preferably 35 parts by mass or more, per 100 parts by mass of the rubber component. When the amount is not less than the lower limit, good properties such as wet braking performance tend to be obtained. The upper limit of the amount of the resin is not limited, but from a process (adhesion) standpoint, it is preferably 80 parts by mass or less, more preferably 60 parts by mass or less, still more preferably 50 parts by mass or less, particularly preferably 40 parts by mass or less. It should be noted that the range indicated above also suitably applies to the amount of liquid resin, if used.

From the standpoint of properties such as wet braking performance, the resin used in the center rubber composition is preferably a liquid resin. The term "liquid resin" refers to a thermoplastic resin typically having a weight average molecular weight of from several hundreds to several thousands which may be incorporated into a natural rubber or synthetic rubber to impart adhesion. Examples of the liquid resin include petroleum or coal resins in liquid state such as coumarone-indene resins, indene resins, α-methylstyrene resins, vinyltoluene resins, and polyisopentane resins. Other examples of the liquid resin include natural resins in liquid state such as coumarone resins, naphthene resins, phenol resins, terpene resins, terpene-phenolic resins, rosins, rosin esters, hydrogenated rosin derivatives, and hydrogenated terpene resins; and synthetic resins in liquid state such as alkylphenol-formaldehyde resins, C5 petroleum resins, C9 petroleum resins, aliphatic petroleum resins, xylene-formaldehyde resins, phenol-modified C9 petroleum resins, carboxylic acid-modified C9 petroleum resins, and dicyclopentadiene-modified C9 petroleum resins. Among these, the liquid resin is preferably at least one selected from the group consisting of liquid coumarone-indene resins, liquid indene resins, and liquid α-methylstyrene resins, more preferably liquid coumarone-indene resins.

The term "coumarone-indene resin" refers to a resin containing coumarone and indene as monomer components forming the skeleton (backbone) of the resin. Examples of monomer components which may be contained in the skeleton in addition to coumarone and indene include styrene, α-methylstyrene, methylindene, and vinyltoluene. The terms "indene resin" and "α-methylstyrene resin" refer to resins containing indene and α-methylstyrene, respectively, as a main monomer component forming the skeleton (backbone) of the corresponding resin.

In the center rubber composition, the liquid resin has a softening point of -20°C or higher, preferably -5°C or higher, more preferably 0°C or higher. A softening point of not lower than the lower limit tends to lead to good kneadability with the rubber component. The softening point of the liquid resin is also preferably 35°C or lower, more preferably 25°C or lower, still more preferably 18°C or lower, particularly preferably 17°C or lower. A softening point of not higher than the upper limit tends to lead to good rolling resistance properties.

Herein, the softening point is determined in accordance with JIS K 6220 using a ring and ball softening point measuring apparatus and defined as the temperature at which the ball drops down.

The center rubber composition preferably contains an oil. The center rubber composition preferably contains the oil in an amount of 10 parts by mass or more, more preferably 20 parts by mass or more, still more preferably 30 parts by mass or more, per 100 parts by mass of the rubber component. The upper limit of the amount is preferably 70 parts by mass or less, more preferably 60 parts by mass or less, still more preferably 50 parts by mass or less.

It should be noted that the amount of the oil includes the amount of oil present in the rubber (oil extended rubber).

Examples of the oil include process oils, vegetable fats and oils, and mixtures thereof. Examples of the process oils include paraffinic process oils, aromatic process oils, and naphthenic process oils. Examples of the vegetable fats and oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. These may be used alone or in combinations of two or more. To better achieve the advantageous effects, naphthenic and/or aromatic process oils are preferred among these.

The oil may be a commercial product of, for example, Idemitsu Kosan Co., Ltd., Sankyo Yuka Kogyo K.K., Japan Energy Corporation, Olisoy, H&R, Hokoku Corporation, Showa Shell Sekiyu K.K., or Fuji Kosan Co., Ltd.

In the center rubber composition, the combined amount of the resin and oil per 100 parts by mass of the rubber component is preferably 20 parts by mass or more, more preferably 30 parts by mass or more, still more preferably 40 parts by mass or more. When the combined amount is not less than the lower limit, good properties such as dry grip performance and wet braking performance tend to be obtained. The upper limit of the combined amount is preferably 100 parts by mass or less, more preferably 90 parts by mass or less, still more preferably 80 parts by mass or less, particularly preferably 60 parts by mass or less. When the combined amount is not more than the upper limit, good abrasion resistance tends to be obtained. It should be noted that the range as indicated above also suitably applies to

the combined amount of liquid resin and oil, if used.

The center rubber composition may contain a wax. The amount of the wax per 100 parts by mass of the rubber component is preferably 1 to 20 parts by mass, more preferably 1.5 to 10 parts by mass.

Non-limiting examples of the wax include petroleum waxes such as paraffin waxes and microcrystalline waxes; naturally-occurring waxes such as plant waxes and animal waxes; and synthetic waxes such as polymers of ethylene, propylene, or other monomers. These may be used alone or in combinations of two or more. Among these, petroleum waxes are preferred, with paraffin waxes being more preferred.

The wax may be a commercial product of, for example, Ouchi Shinko Chemical Industrial Co., Ltd., Nippon Seiro Co., Ltd., or Seiko Chemical Co., Ltd.

The center rubber composition preferably contains an antioxidant.

From the standpoint of overall performance including fuel economy and cut and chip resistance, the amount of the antioxidant per 100 parts by mass of the rubber component is preferably 1 to 10 parts by mass, more preferably 2 to 7 parts by mass.

Examples of the antioxidant include: naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as 2,2,4-trimethyl-1,2-dihydroquinoline polymer; monophenolic antioxidants such as 2,6-di-t-butyl-4-methylphenol and styrenated phenol; and bis-, tris-, or polyphenolic antioxidants such as tetrakis-[methylene-3-(3',5'-di-t-butyl-4'-hydroxyphenyl)-propionate] methane. These may be used alone or in combinations of two or more. Among these, p-phenylenediamine and/or quinoline antioxidants are preferred, with N-(1,3-dimethylbutyl)-N'-phenyl-p-phenylenediamine and/or 2,2,4-trimethyl-1,2-dihydroquinoline polymer being more preferred.

The antioxidant may be a commercial product of, for example, Seiko Chemical Co., Ltd., Sumitomo Chemical Co., Ltd., Ouchi Shinko Chemical Industrial Co., Ltd., or Flexsys.

The center rubber composition preferably contains stearic acid. The amount of the stearic acid per 100 parts by mass of the rubber component is preferably 0.5 to 10 parts by mass, more preferably 1 to 5 parts by mass.

The stearic acid may be a conventional one, for example, a commercial product of NOF Corporation, Kao Corporation, FUJIFILM Wako Pure Chemical Corporation, or Chiba Fatty Acid Co., Ltd.

The center rubber composition preferably contains zinc oxide. The amount of the zinc oxide per 100 parts by mass of the rubber component is preferably 0.5 to 10 parts by mass, more preferably 1 to 5 parts by mass.

The zinc oxide may be a conventional one, for example, a commercial product of Mitsui Mining & Smelting Co., Ltd., Toho Zinc Co., Ltd., HakusuiTech Co., Ltd., Seido Chemical Industry Co., Ltd., or Sakai Chemical Industry Co., Ltd.

The center rubber composition preferably contains sulfur.

The amount of the sulfur per 100 parts by mass of the rubber component is preferably 0.5 to 10 parts by mass, more preferably 1 to 5 parts by mass, still more preferably 1 to 3 parts by mass.

Examples of the sulfur include those commonly used in the rubber industry, such as powdered sulfur, precipitated sulfur, colloidal sulfur, insoluble sulfur, highly dispersible sulfur, and soluble sulfur. These may be used alone or in combinations of two or more.

The sulfur may be a commercial product of, for example, Tsurumi Chemical Industry Co., Ltd., Karuizawa sulfur Co., Ltd., Shikoku Chemicals Corporation, Flexsys, Nippon Kanryu Industry Co., Ltd., or Hosoi Chemical Industry Co., Ltd.

The center rubber composition preferably contains a vulcanization accelerator.

The amount of the vulcanization accelerator per 100 parts by mass of the rubber component is preferably 0.3 to 5.0 parts by mass, more preferably 0.5 to 4.0 parts by mass, still more preferably 0.7 to 3.0 parts by mass.

Examples of the vulcanization accelerator include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or more. From the standpoint of overall performance including fuel economy and cut and chip resistance, sulfenamide and/or guanidine vulcanization accelerators are preferred among these.

The center rubber composition may contain an organic crosslinking agent.

Any organic crosslinking agent may be used. Examples include maleimide compounds, alkylphenol-sulfur chloride condensates, organic peroxides, and amine organosulfides. These may be used alone or in combinations of two or more, optionally together with sulfur. The organic crosslinking agent may be incorporated in an amount of, for example, 10 parts by mass or less per 100 parts by mass of the rubber component.

The center rubber composition can be prepared by conventional methods. Specifically, it may be prepared by

kneading the components in a kneading machine such as a Banbury mixer, kneader, or open roll mill, and then vulcanizing the kneaded mixture.

[Shoulder rubber]

The shoulder rubber composition forming the shoulder rubber contains a rubber component including a styrene-butadiene rubber (SBR).

From the standpoint of properties such as dry grip performance, the shoulder rubber composition contains SBR in an amount of 70% by mass or more, preferably 75% by mass or more, more preferably 80% by mass or more based on 100% by mass of the rubber component. From the standpoint of ice performance, the amount is preferably 95% by mass or less, more preferably 90% by mass or less, still more preferably 85% by mass or less.

The styrene content, vinyl content, and Mw of the SBR in the shoulder rubber composition may suitably be within the ranges as indicated for the center rubber composition. The SBR used in the shoulder rubber composition may suitably be as described for the center rubber composition.

The shoulder rubber composition preferably contains BR in an amount of 5% by mass or more, more preferably 10% by mass or more, still more preferably 15% by mass or more based on 100% by mass of the rubber component. When the amount is not less than the lower limit, good properties such as abrasion resistance and ice performance tend to be obtained. The upper limit of the amount is preferably 50% by mass or less, more preferably 35% by mass or less, still more preferably 30% by mass or less, further preferably 25% by mass or less. When the amount is not more than the upper limit, the predetermined SBR content tends to be ensured so that good properties such as dry grip performance can be obtained.

The BR used in the shoulder rubber composition may suitably be as described for the center rubber composition.

The silica used in the shoulder rubber composition may suitably be as described for the center rubber composition. The silica used in the shoulder rubber composition may suitably have a $N_2SA$ within the range as indicated for the center rubber composition.

In the shoulder rubber composition, the amount of the silica per 100 parts by mass of the rubber component is 20 parts by mass or more, preferably 40 parts by mass or more, more preferably 60 parts by mass or more, still more preferably 70 parts by mass or more. When the amount is not less than the lower limit, good properties such as dry grip performance and color tone tend to be obtained. The upper limit of the amount is less than 90 parts by mass, preferably not more than 85 parts by mass. When the amount is not more than the upper limit, good dispersibility tends to be obtained.

The shoulder rubber composition preferably contains a silane coupling agent together with the silica.

The silane coupling agent used in the shoulder rubber composition may suitably be as described for the center rubber composition. The amount of the silane coupling agent in the shoulder rubber composition may suitably be within the range as indicated for the amount of the silane coupling agent in the center rubber composition.

The carbon black used in the shoulder rubber composition may suitably be as described for the center rubber composition. The carbon black used in the shoulder rubber composition may suitably have a $N_2SA$ within the range as indicated for the center rubber composition.

In the shoulder rubber composition, the amount of the carbon black per 100 parts by mass of the rubber component is more than 15 parts by mass, preferably not less than 17 parts by mass, more preferably not less than 18 parts by mass. When the amount is not less than the lower limit, the effect produced by the incorporation of carbon black tends to be sufficient. Moreover, the amount of the carbon black is 40 parts by mass or less, preferably 35 parts by mass or less, more preferably 30 parts by mass or less. When the amount is not more than the upper limit, good dispersibility tends to be obtained.

In the shoulder rubber composition, the amount of the silica based on 100% by mass of the combined amount of the silica and carbon black is preferably 50% by mass or more, more preferably 65% by mass or more, still more preferably 75% by mass or more. When the amount is not less than the lower limit, good properties such as dry grip performance tend to be obtained. The upper limit of the amount is preferably 90% by mass or less, more preferably 85% by mass or less.

The resin used in the shoulder rubber composition may suitably be as described for the center rubber composition. In the case where the shoulder rubber composition contains a liquid resin, the softening point of the liquid resin may suitably be within the range as described for the center rubber composition.

In the shoulder rubber composition, the amount of the resin per 100 parts by mass of the rubber component is 1 part by mass or more, preferably 5 parts by mass or more, more preferably 10 parts by mass or more, still more preferably 15 parts by mass or more. When the amount is not less than the lower limit, good properties such as wet braking performance tend to be obtained. From the standpoint of abrasion resistance, the upper limit of the amount of the resin is 40 parts by mass or less, preferably 35 parts by mass or less, more preferably 30 parts by mass or less. It should be noted that the range indicated above also suitably applies to the amount of liquid resin, if used.

The shoulder rubber composition preferably contains an oil. The oil used in the shoulder rubber composition

may suitably be as described for the center rubber composition.

In the shoulder rubber composition, the amount of the oil per 100 parts by mass of the rubber component is preferably 10 parts by mass or more, more preferably 30 parts by mass or more, still more preferably 40 parts by mass or more. The upper limit of the amount is preferably 80 parts by mass or less, more preferably 70 parts by mass or less, still more preferably 60 parts by mass or less.

It should be noted that the amount of the oil includes the amount of oil contained in the rubber (oil extended rubber) .

In the shoulder rubber composition, the combined amount of the resin and oil per 100 parts by mass of the rubber component is preferably 20 parts by mass or more, more preferably 45 parts by mass or more, still more preferably 55 parts by mass or more. When the combined amount is not less than the lower limit, good properties such as dry grip performance tend to be obtained. The upper limit of the combined amount is preferably 100 parts by mass or less, more preferably 90 parts by mass or less, still more preferably 80 parts by mass or less, particularly preferably 60 parts by mass or less. When the combined amount is not more than the upper limit, good abrasion resistance tends to be obtained. It should be noted that the range as indicated above also suitably applies to the combined amount of liquid resin and oil, if used.

The shoulder rubber composition may contain a wax, antioxidant, stearic acid, zinc oxide, sulfur, vulcanization accelerator, and/or organic crosslinking agent. For example, these materials may suitably be as described for the center rubber composition. When the shoulder rubber composition contains these materials, their amounts may suitably be within the ranges as indicated for the center rubber composition.

The shoulder rubber composition can be prepared by conventional methods. Specifically, it may be prepared by kneading the components in a kneading machine such as a Banbury mixer, kneader, or open roll mill, and then vulcanizing the kneaded mixture.

The kneading conditions of the center or shoulder rubber composition are as follows. In a base kneading step that includes kneading additives other than vulcanizing agents and vulcanization accelerators, the kneading temperature is usually 50 to 200°C, preferably 80 to 190°C, and the kneading time is usually 30 seconds to 30 minutes, preferably 1 to 30 minutes. In a final kneading step that includes kneading a vulcanizing agent and/or vulcanization accelerator, the kneading temperature is usually 100°C or lower, preferably from room temperature to 80°C. Then, the composition obtained by kneading the vulcanizing agent and/or vulcanization accelerator is usually vulcanized by, for example, press vulcanization. The vulcanization temperature is usually 120 to 200°C, preferably 140 to 180°C.

The motorcycle tire of the present invention can be produced using the center and shoulder rubber compositions by usual methods. Specifically, the unvulcanized center and shoulder rubber compositions including the components may be extruded and processed into center and shoulder rubbers, respectively, and then assembled with other tire components in a usual manner in a tire building machine to build an unvulcanized tire, which may then be heated and pressurized in a vulcanizer to produce a tire.

## EXAMPLES

The present invention is specifically described with reference to examples but is not limited thereto.

The chemicals used in examples and comparative examples are listed below.

SBR: SLR6430 (styrene content: 40% by mass, vinyl content: 24% by mass, Mw: 1,360,000, a rubber containing 37.5 parts by mass of oil per 100 parts by mass of rubber solids) available from Dow Chemical

BR: BR150B (cis content: 98% by mass) available from Ube Industries, Ltd.

Carbon black: DIABLACK I (N220, $N_2SA$: 114 $m^2/g$) available from Mitsubishi Chemical Corporation

Silica: VN3 ($N_2SA$: 175 $m^2/g$) available from Degussa

Silane coupling agent: Si266 (bis(3-triethoxysilylpropyl)disulfide) available from Degussa

Liquid resin: Novares C10 (liquid coumarone-indene resin, softening point: 5 to 15°C) available from Rutgers Chemicals

Zinc oxide: Zinc oxide #1 available from Mitsui Mining & Smelting Co., Ltd.

Stearic acid: TSUBAKI available from NOF Corporation

Antioxidant: Antigene 6C available from Sumitomo Chemical Co., Ltd.

Wax: SUNNOC S available from Ouchi Shinko Chemical Industrial Co., Ltd.

Oil: TDAE oil

Sulfur: powdered sulfur available from Tsurumi Chemical Industry Co., Ltd.

Vulcanization accelerator NS: NOCCELER NS (N-tert-butyl-2-benzothiazylsulfenamide) available from Ouchi Shinko Chemical Industrial Co., Ltd.

Vulcanization accelerator DPG: NOCCELER D (1,3-diphenylguanidine) available from Ouchi Shinko Chemical Industrial Co., Ltd.

(Examples and Comparative Examples)

The chemicals other than the sulfur and the vulcanization accelerators in the formulation amounts indicated in Table 1 were kneaded in a Banbury mixer at 60 rpm for four minutes to give a kneaded mixture. To the kneaded mixture were then added the sulfur and vulcanization accelerators, and they were kneaded in an open twin-roll mill to give an unvulcanized rubber sheet (thickness: 4 mm). The unvulcanized rubber sheet was processed into the shape of a tread rubber (center or shoulder rubber) and then assembled with other tire components and vulcanized at 170°C for 15 minutes to produce a test tire having a structure as illustrated in Fig. 1 with the center and shoulder rubbers indicated in Table 2.

The test tires prepared as above were evaluated as described below. Table 2 shows the results.

<Dry grip performance>

The test tires were mounted on the front and rear wheels of Suzuki Bandit 1250 (displacement: 1250 cc, front tire: 120/70ZR17, rear tire: 200/55ZR17). A test driver drove the motorcycle on a test track under dry asphalt conditions. The driver subjectively evaluated the stability of steering control during the start, acceleration, and cornering. The results of the subjective evaluation are expressed as an overall index relative to Comparative Example 1 (= 100), where a score of 105 indicates that the test driver judged the performance was obviously improved; and a score of 110 indicates that the test driver judged the performance reached a high level that had never been achieved before. Thus, a higher score indicates better grip performance on dry roads.

<Wet braking performance>

The test tires were mounted on the front and rear wheels of Suzuki Bandit 1250 (displacement: 1250 cc, front tire: 120/70ZR17, rear tire: 200/55ZR17). The motorcycle was driven on wet asphalt, and the stopping distance from an initial speed of 100 km/h was measured and expressed as an index relative to Comparative Example 1 (= 100) using the equation below. A higher index indicates a shorter stopping distance and better wet braking performance (braking performance on wet roads).

$$\text{(Wet braking performance index)} = \text{(Stopping distance of Comparative Example 1)}/\text{(Stopping distance of tire of each example)} \times 100$$

<Ice performance>

The test tires were mounted on the front and rear wheels of Suzuki Bandit 1250 (displacement: 1250 cc, front tire: 120/70ZR17, rear tire: 200/55ZR17). A test driver drove the motorcycle on a test track under icy road conditions. The driver subjectively evaluated the stability of steering control during the start, acceleration, and cornering. The results of the subjective evaluation are expressed as an overall index relative to Comparative Example 1 (= 100), where a score of 105 indicates that the test driver determined that the performance was obviously improved; and a score of 110 indicates that the performance reached a high level that had never been achieved before. Thus, a higher score indicates better ice performance (grip performance on icy roads).

<Abrasion resistance>

The test tires inflated to a normal internal pressure were mounted on the front and rear wheels of Suzuki Bandit 1250 (displacement: 1250 cc, front tire: 120/70ZR17, rear tire 200/55ZR17). The motorcycle was run at 200 km/h on a test circuit under dry asphalt conditions. After running 200 km, the decrease in groove depth of the tires was measured. Then, the running distance at which the groove depth decreased by 1 mm was calculated. The running distances of the tires are expressed as an index relative to Comparative Example 1 (= 100) using the equation below. A higher index indicates better abrasion resistance.

(Abrasion resistance index) = (Running distance of test tire of each example)/(Running distance of Comparative Example 1) × 100

<Color tone difference>

The difference in color tone between the blocks (or between the first and second tread parts) of the test tires was determined by visual sensory evaluation using the following criteria.
Good (100 points): No noticed difference in color tone Fair (95 points): A slightly noticeable but acceptable difference in color tone
Poor (90 points) : An unacceptable large difference in color tone

[Table 1]

| | | Formulation 1 | Formulation 2 | Formulation 3 | Formulation 4 | Formulation 5 | Formulation 6 | Formulation 7 | Formulation 8 | Formulation 9 | Formulation 10 | Formulation 11 | Formulation 12 |
|---|---|---|---|---|---|---|---|---|---|---|---|---|---|
| Formulation amount (parts by mass) | SBR (Extender oil) | 65 (24.4) | 80 (30) | 50 (18.8) | 65 (24.4) | 80 (30) | 70 (26.3) | 65 (24.4) | 65 (24.4) | 80 (30) | 80 (30) | 80 (30) | 85 (31.9) |
| | BR | 35 | 20 | 50 | 35 | 20 | 30 | 35 | 35 | 20 | 20 | 20 | 15 |
| | Carbon black | 10 | 75 | 10 | 60 | 20 | 60 | 10 | 7 | 20 | 30 | 20 | 20 |
| | Silica | 90 | 15 | 90 | 30 | 80 | 30 | 95 | 90 | 60 | 80 | 80 | 80 |
| | Silane coupling agent | 7.2 | 1.2 | 7.2 | 2.4 | 6.4 | 2.4 | 7.6 | 7.2 | 4.8 | 6.4 | 6.4 | 6.4 |
| | Liquid resin | 25 | 20 | 35 | 25 | 20 | 10 | 25 | 25 | 20 | 20 | 25 | 20 |
| | Zinc oxide | 2 | 2 | 2 | 2 | 2 | 2 | 2 | 2 | 2 | 2 | 2 | 2 |
| | Stearic acid | 2 | 2 | 2 | 2 | 2 | 2 | 2 | 2 | 2 | 2 | 2 | 2 |
| | Antioxidant | 3 | 3 | 3 | 3 | 3 | 3 | 3 | 3 | 3 | 3 | 3 | 3 |
| | Wax | 2.5 | 2.5 | 2.5 | 2.5 | 2.5 | 2.5 | 2.5 | 2.5 | 2.5 | 2.5 | 2.5 | 2.5 |
| | Oil | 25 | 30 | 20 | 25 | 30 | 40 | 25 | 25 | 30 | 30 | 30 | 30 |
| | Sulfur | 2 | 2 | 2 | 2 | 2 | 2 | 2 | 2 | 2 | 2 | 2 | 2 |
| | Vulcanization accelerator NS | 1.5 | 1.5 | 1.5 | 1.5 | 1.5 | 1.5 | 1.5 | 1.5 | 1.5 | 1.5 | 1.5 | 1.5 |
| | Vulcanization accelerator DPG | 1 | 1 | 1 | 1 | 1 | 1 | 1 | 1 | 1 | 1 | 1 | 1 |

[Table 2]

| | | Comp. Ex. 1 | Comp. Ex. 2 | Comp. Ex. 3 | Comp. Ex. 4 | Comp. Ex. 5 | Comp. Ex. 6 | Ex. 1 | Ex. 2 | Ex. 3 | Ex. 4 | Ex. 5 | Ex. 6 | Ex. 7 | Ex. 8 |
|---|---|---|---|---|---|---|---|---|---|---|---|---|---|---|---|
| Structure | Center rubber | Formulation 2 | Formulation 1 | Formulation 4 | Formulation 1 | Formulation 4 | Formulation 5 | Formulation 1 | Formulation 3 | Formulation 7 | Formulation 8 | Formulation 1 | Formulation 1 | Formulation 1 | Formulation 1 |
| | Shoulder rubber | Formulation 1 | Formulation 4 | Formulation 3 | Formulation 2 | Formulation 2 | Formulation 6 | Formulation 5 | Formulation 5 | Formulation 5 | Formulation 5 | Formulation 9 | Formulation 10 | Formulation 11 | Formulation 12 |
| Evaluation | Dry grip performance | 100 | 102 | 95 | 108 | 107 | 103 | 105 | 105 | 105 | 105 | 104 | 110 | 108 | 109 |
| | Wet braking performance | 100 | 103 | 95 | 103 | 94 | 107 | 104 | 99 | 108 | 104 | 104 | 104 | 104 | 103 |
| | Ice performance | 100 | 105 | 101 | 105 | 101 | 102 | 105 | 110 | 105 | 104 | 105 | 104 | 104 | 103 |
| | Abrasion resistance | 100 | 105 | 108 | 105 | 108 | 95 | 105 | 110 | 104 | 106 | 105 | 105 | 105 | 104 |
| | Color tone difference | 90 | 90 | 90 | 90 | 97 | 91 | 99 | 99 | 98 | 99 | 98 | 97 | 99 | 99 |

Comp. Ex.: Comparative Example
Ex.: Example

Tables 1 and 2 demonstrate that the tires of the examples including center and shoulder rubbers formed of specific center and shoulder rubber compositions exhibited significantly improved overall performance including dry grip performance, wet braking performance, abrasion resistance, ice performance, and color tone.

REFERENCE SIGNS LIST

| | |
|---|---|
| 1 | motorcycle tire |
| 2 | tread portion |
| 2A | tread face |
| 2e | tread edge |
| 3 | sidewall portion |
| 4 | bead portion |
| 5 | bead core |
| 6 | carcass |
| 7 | belt layer |
| 8 | bead apex |
| 9 | tread rubber |
| 9A | center rubber |
| 9B | shoulder rubber |
| C | tire equator |
| 12 | normal line |

## Claims

1. A motorcycle tire, comprising a tread portion comprising a tread rubber, the tread rubber being divided into at least three parts in a tire width direction,

    the tread rubber comprising a center rubber at its center, viewed in the tire width direction, and shoulder rubbers respectively on opposite sides of the center rubber, viewed in the tire width direction,
    the center rubber being formed of a center rubber composition containing a rubber component with a styrene-butadiene rubber content of 50% by mass or higher, silica, carbon black, and a resin,
    the center rubber composition containing, per 100 parts by mass of the rubber component, 90 parts by mass or more of the silica, 1 to 15 parts by mass of the carbon black, and 25 parts by mass or more of the resin,
    the shoulder rubbers each being formed of a shoulder rubber composition containing a rubber component with a styrene-butadiene rubber content of 70% by mass or higher, silica, carbon black, and a resin,
    the shoulder rubber composition containing, per 100 parts by mass of the rubber component, at least 20 parts by mass but less than 90 parts by mass of the silica, more than 15 parts by mass but not more than 40 parts by mass of the carbon black, and 1 to 40 parts by mass of the resin.

2. The motorcycle tire according to claim 1,

    wherein the center rubber composition has a polybutadiene rubber content of 10 to 50% by mass based on 100% by mass of the rubber component, and
    the shoulder rubber composition has a polybutadiene rubber content of 5 to 30% by mass based on 100% by mass of the rubber component.

## Patentansprüche

1. Motorradreifen, umfassend einen Laufflächenabschnitt, der einen Laufflächenkautschuk umfasst, wobei der Laufflächenkautschuk in einer Reifenbreitenrichtung in mindestens drei Teile unterteilt ist,

    wobei der Laufflächenkautschuk einen Zentrumskautschuk in seinem Zentrum, in der Reifenbreitenrichtung betrachtet, und Schulterkautschuke jeweils an gegenüberliegenden Seiten des Zentrumskautschuks, in der Reifenbreitenrichtung betrachtet, umfasst,
    wobei der Zentrumskautschuk mit einer Zentrumskautschukzusammensetzung gebildet ist, die eine Kautschukkomponente mit einem Styrol-Butadien-Kautschuk-Gehalt von 50 Massenprozent oder höher, Siliziumdioxid, Ruß und ein Harz enthält,
    wobei die Zentrumskautschukzusammensetzung pro 100 Massenteile der Kautschukzusammensetzung 90 Massenteile oder mehr des Siliziumdioxids, 1 bis 15 Massenteile des Rußes und 25 Massenteile oder mehr des Harzes enthält,
    wobei jeder der Schulterkautschuke mit einer Schulterkautschukzusammensetzung gebildet ist, die eine Kautschukkomponente mit einem Styrol-Butadien-Kautschuk-Gehalt von 70 Massenprozent oder höher, Siliziumdioxid, Ruß und ein Harz enthält,

wobei die Schulterkautschukzusammensetzung pro 100 Massenteile der Kautschukkomponente mindestens 20 Massenteile, aber weniger als 90 Massenteile des Siliziumdioxids, mehr als 15 Massenteile, aber nicht mehr als 40 Massenteile des Rußes, und 1 bis 40 Massenteile des Harzes enthält.

**2.** Motorradreifen nach Anspruch 1,

wobei die Zentrumskautschukzusammensetzung einen Polybutadienkautschuk-Gehalt von 10 bis 50 Massenprozent aufweist, bezogen auf 100 Massenprozent der Kautschukkomponente, und

die Schulterkautschukzusammensetzung einen Polybutadienkautschuk-Gehalt von 5 bis 30 Massenprozent aufweist, bezogen auf 100 Massenprozent der Kautschukkomponente.

## Revendications

**1.** Pneu de moto, comprenant une partie bande de roulement comprenant un caoutchouc de bande de roulement, le caoutchouc de bande de roulement étant divisé en au moins trois parties dans la direction de la largeur du pneu,

le caoutchouc de bande de roulement comprenant un caoutchouc central à son centre, vu dans la direction de la largeur du pneu, et des caoutchoucs d'épaulements respectivement sur les côtés opposés du caoutchouc central, vu dans la direction de la largeur du pneu,

le caoutchouc central étant formé d'une composition de caoutchouc central contenant un composant de caoutchouc avec une teneur en caoutchouc styrène-butadiène égale ou supérieure à 50 % en masse, de silice, de noir de carbone, et d'une résine,

la composition de caoutchouc central contenant, pour 100 parties en masse de composant de caoutchouc, 90 parties en masse ou plus de silice, 1 à 15 parties en masse de noir de carbone, et 25 parties en masse ou plus de résine,

les caoutchoucs d'épaulements étant chacun formé d'une composition de caoutchouc d'épaulement contenant un composant de caoutchouc avec une teneur en caoutchouc styrène-butadiène égale ou supérieure à 70 % en masse, de silice, de noir de carbone, et d'une résine,

la composition de caoutchouc d'épaulement contenant, pour 100 parties en masse de composant de caoutchouc, au moins 20 parties en masse, mais moins de 90 parties en masse, de silice, plus de 15 parties en masse, mais pas plus de 40 parties en masse, de noir de carbone, et 1 à 40 parties en masse de résine.

**2.** Pneu de moto selon la revendication 1, dans lequel la composition de caoutchouc central a une teneur de caoutchouc polybutadiène de 10 à 50 % en masse sur la base de 100 % en masse de composant de caoutchouc, et
la composition de caoutchouc d'épaulement a une teneur en caoutchouc polybutadiène de 5 à 30 % en masse sur la base de 100 % en masse de composant de caoutchouc.

FIG.1

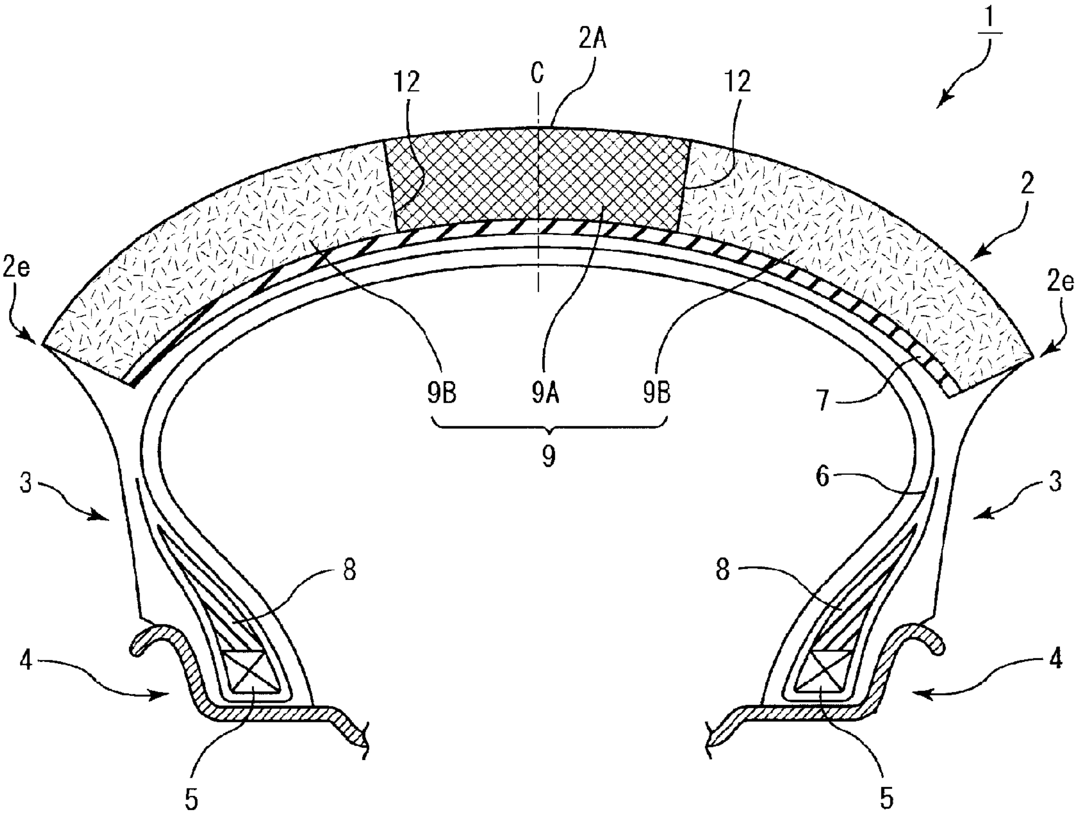

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011189808 A
- JP 2010111753 A